Europäisches Patentamt

European Patent Office

Office européen des brevets

(19)

(11) Publication number: **0 324 251**
**A2**

(12) **EUROPEAN PATENT APPLICATION**

(21) Application number: **88311995.0**

(22) Date of filing: **19.12.88**

(51) Int. Cl.⁴: **B62D 55/26 , B62D 55/275 , B62D 55/21**

(30) Priority: **11.01.88 US 141965**

(43) Date of publication of application:
**19.07.89 Bulletin 89/29**

(84) Designated Contracting States:
**DE FR GB**

(71) Applicant: **GENERAL MOTORS CORPORATION**
**General Motors Building 3044 West Grand Boulevard**
**Detroit Michigan 48202(US)**

(72) Inventor: **Savage, Russell C.**
**511 West Fifth**
**Anderson IN 46016(US)**
Inventor: **Skirha, Martin D.**
**1007 Forest Drive**
**Anderson IN 46011(US)**
Inventor: **Zeller, Gary P.**
**Route 4 Box 190**
**Anderson IN 46011(US)**

(74) Representative: **Haines, Arthur Donald et al**
**Patent Section (F6) Vauxhall Motors Limited**
**P.O. Box 3 Kimpton Road**
**Luton, Beds. LU2 OSY(GB)**

(54) **Composite tread member for track-laying vehicles.**

(57) A composite tread member (14) used in a track for a track-laying vehicle. The tread member (14) is moulded of a polymeric material (18) reinforced with abrasion-resistant fibres (52). It can be moulded in a reaction-injection moulding process or in a resin-transfer moulding process by first placing a metal support member (16) and a plurality of reinforcing fibre bundles (52) in the mould and then injecting a polymeric matrix material (18) into the mould. The reinforcing fibre bundles (52) used in the novel composite tread member (14) are first interwoven with polyester fibre bundles (54) into a narrow webbing (50) which is then rolled up in elongated rolls (56) or pleated in pleats of predetermined width and thickness. The polymeric matrix material (18) used in the composite tread member (14) can be either a Nylon 6 RIM material, a polyurethane RIM material, or a polyurea RIM material. The novel composite tread members (14) have superior abrasion-resistant properties and durability when compared to a conventional unreinforced tread member.

Fig. 2

Fig. 3

## COMPOSITE TREAD MEMBER FOR TRACK-LAYING VEHICLES

### Field of the invention

The present invention generally relates to a composite tread member for a track-laying vehicle as specified in the preamble of claim 1, for example as disclosed in US-A-3 870 380.

### Background of the invention

Track-laying vehicles are broadly used in construction or military applications for their superior tracking capability in rough terrain. A track on a track-laying vehicle is under tremendous strain and severe wear conditions when the vehicle is in operation. This is especially true with modern track-laying vehicles where the vehicle is expected to carry a high load and to be capable of superior acceleration and speed.

A track on a track-laying vehicle can be constructed with either an integral tread system or a replaceable tread system. In the integral tread system, a track is connected by many track units, each of which is moulded of hard rubber material around a steel support member. A track with the integral tread system has the benefit of lightweight construction, however, the entire track must be replaced when the rubber tread surface is worn.

In a track equipped with replaceable tread members, individual tread members are connected by mechanical means to a permanent steel link unit and can be replaced when they are worn. The replaceable tread track can therefore be more easily maintained in the operation of a track-laying vehicle.

Conventional tread members are moulded of hard rubber materials. The durability of the rubber and thus the lifetime of a tread is always a problem in the design of a track. The selection of the rubber material is a difficult task in that different performance requirements of a track-laying vehicle demand different properties of the rubber material. For instance, a high durometer, hard rubber material used in moulding a tread member works well at high speed on smooth roads but disintegrates quickly in rough terrain. On the other hand, a low durometer, soft rubber material would work well in rough terrain but deteriorates quickly on smooth roads at high speeds.

The most commonly seen problems with rubber-moulded tread members are overheating which causes "blowouts" i.e. catastrophic failure of the rubber, "chunking", where large pieces of the rubber materials fall off the tread member, and rapid wear due to the poor abrasion resistance of the rubber material. In military applications, the high thermal profile of rubber produced during use of the track is also undesirable since a track-laying vehicle such as a tank can be easily detected in the dark by infra-red detectors.

It is, therefore, an object of the present invention to provide a new composite tread member which can be used in a track-laying vehicle equipped with either an integral tread system or a replaceable tread system.

It is another object of the present invention to provide a composite material for the moulding of a tread member used on a track-laying vehicle, which is capable of long surface life and problem-free operations.

It is a further object of the present invention to provide a polymeric composite material for the moulding of a tread member used on a track-laying vehicle, which is capable of providing prolonged surface life without premature failures.

### Summary of the invention

A tread member for use in a track for a track-laying vehicle in accordance with the present invention is characterised by the features specified in the characterising portion of claim 1.

The present invention provides a new and novel composite tread member for a track-laying vehicle that is moulded of a polymeric material, or a polymeric matrix material, reinforced with abrasion-resistant fibres. A polymeric matrix material that has been employed is a Nylon 6-based reaction-injection moulding (RIM) material. In the composite tread member of the invention, a metal support member in a binocular shape is embedded in the polymeric material, and forms the back portion of the tread member. The binocular-shaped metal support member functions as the mounting hardware so that the tread member may be connected to the track. Reinforcing fibres arranged in various bundle sizes and configurations are embedded in the polymeric matrix material forming the front portion, i.e., the portion constituting the wear surface of the tread member.

In the preferred embodiment of the present invention, the reinforcing fibres used are bundles of polyaramid fibres. A multiplicity of polyaramid fibre bundles are interwoven with polyester fibre bundles into a narrow webbing approximately 5 to 7.5 centimetres wide (2 to 3 inches wide) with the polyaramid fibre bundles running in a transverse direction relative to the webbing. The webbing is then rolled up in an elongated roll and embedded in a polymeric matrix material. In an alternative embodiment of the invention, the webbing is folded up into a pleated form and then embedded in a polymeric matrix material. In either of these embodiments, the polyaramid fibre bundles are embedded in the polymeric matrix material in such a way that the fibre bundles are situated in a near perpendicular relationship to the wear surface of the composite tread member. It has been found that maximum wear resistance of the tread member can be achieved when said polyaramid fibre bundles are embedded in such an orientation.

The novel composite tread members of the invention can be operated on a track-laying vehicle at an operating temperature that is at least 14° C (25° F) lower than the operating temperature of a conventional rubber tread member. The composite tread members of the invention have performed with minimum cracking, chunking, or blowout problems after extensive testing in rough terrain. The tread members have demonstrated an average durability that is 50% longer than that for an unreinforced conventional tread member.

Brief description of the drawings

Other objects, features and advantages of the present invention will become apparent upon consideration of the specification and the appended drawings in which:

Figure 1 is a perspective view showing a partial track mounted on a track-laying vehicle equipped with composite tread members according to the present invention.

Figure 2 is an enlarged view of webbing interwoven by polyaramid fibre bundles and polyester fibre bundles with the polyaramid fibre bundles running in a transverse direction relative to the webbing.

Figure 3 is a perspective view containing a partial cut-away view showing a composite tread member reinforced with polyaramid fibre webbing arranged in an elongated roll form.

Figure 4 is a perspective view containing a partial cut-away view showing a composite tread member reinforced with polyaramid fibre webbing arranged in a pleat form.

Detailed description of the preferred embodiments of the invention

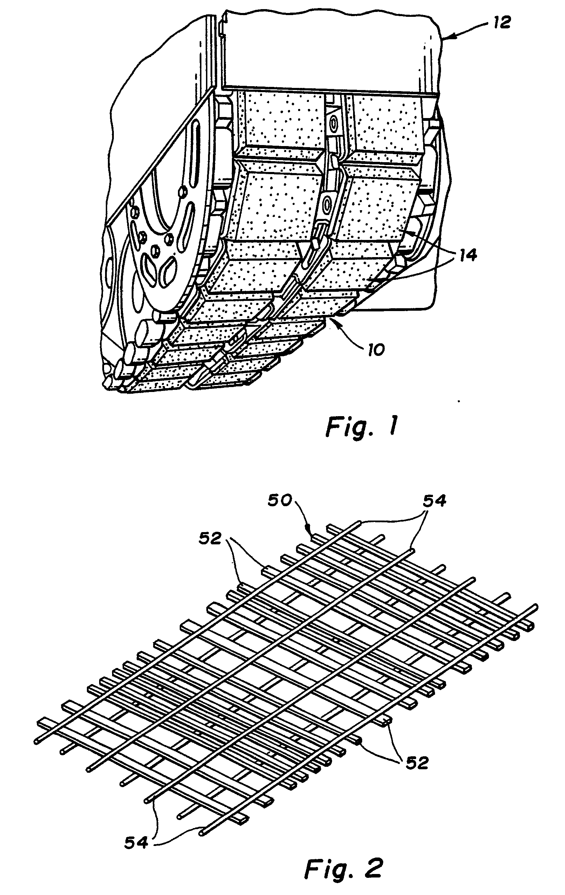

Referring initially to Figure 1, a partial track 10 of a track-laying vehicle 12 is shown. Composite tread members 14 are mounted in track 10 by mechanical means. In Figure 2, a section of a polyaramid fibre webbing 50 is shown. A multiplicity of polyaramid fibre bundles 52 are interwoven with polyester fibre bundles 54 making webbing 50 with the polyaramid fibre bundles 52 running in the transverse direction of the webbing 50. The function of the polyester fibre bundles 54 is to hold the polyaramid fibre bundles 52 in the desired orientation. The polyaramid fibre bundles used are supplied by the DuPont company under the tradename of Kevlar (R.T.M.). Specifically, the fibres are Kevlar (R.T.M.) 29 having a denier of 1500. Each Kevlar (R.T.M.) fibre webbing contains 3-4 bundles per centimetre (7-10 bundles per inch). The polyester fibre bundles used for keeping the polyaramid fibres in place are formed from an industrial polyester fibre having a denier of 1000 and each webbing contains 2 polyester fibre bundles per centimetre (4 polyester fibres per inch).

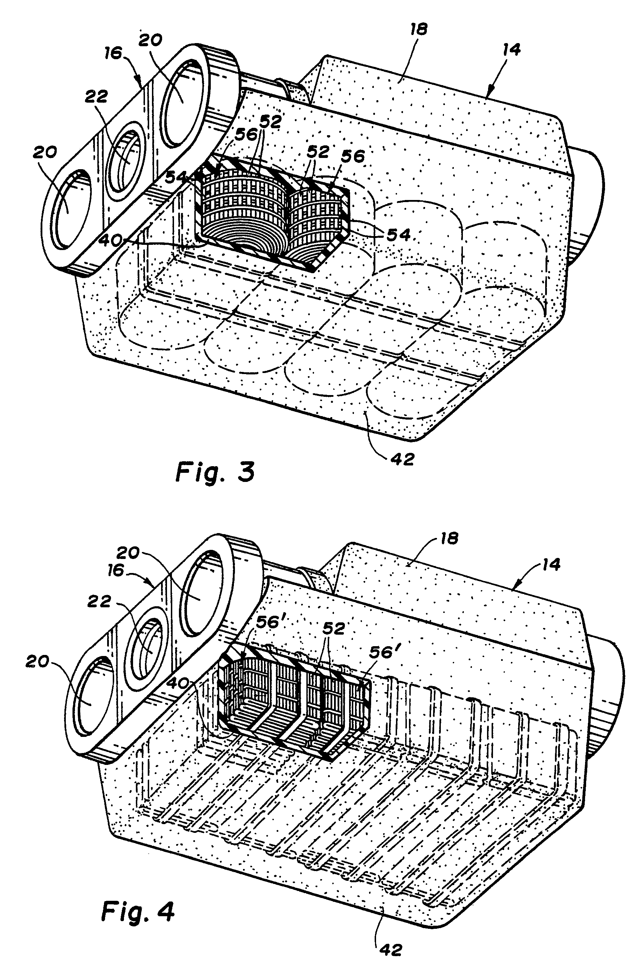

A perspective view of a composite tread member with a partial cut-away view is shown in Figure 3. A metal support member 16 is embedded in a back portion of tread member 14 by polymeric matrix material 18. The metal support member 16 has a binocular shape, and is equipped with mounting apertures 20 for connecting to the track and a heat-dissipation aperture 22. The heat-dissipation aperture 22 serves not only to dissipate heat generated in tread member 14 during operation, but also serves to minimize the amount of polymerio material used. Metal support members have also been used that do not contain the heat-dissipation aperture. Bolt members (not shown) are used to connect tread member 14 to track 10 (Figure 1) through apertures 20. In the cut-away view in Figure 3, elongated rolls 56 of polyaramid fibre webbing are embedded by polymeric matrix material 18 in a front portion of tread member 14. Each elongated roll 56 is formed by rolling up the polyaramid fibre webbing 50 so that the polyaramid fibre bundles 52 therein are aligned with the roll axis of that roll 56.

The elongated rolls 56 are covered by a thin layer 40 of the polymeric matrix material on wear surface 42 of the tread member.

In the next step of making the composite tread members of the invention, a multi-cavity Kirksite tool having matched upper and lower mould members (not shown), gated at a parting line, is used for the RIM injection moulding process. A more expensive aluminium or steel tool may also be used in place of the Kirksite tool. The interior mould surfaces of the upper and the lower mould members define a mould cavity. Elongated rolls 56 of polyaramid fibre webbing 50 are first placed in the lower mould member. A metal support member 16 is then placed on top of the elongated rolls 56. After the upper mould member is closed and locked onto the lower mould member forming a mould cavity containing rolls 56 and metal support member 16, liquid Nylon 6 RIM material is injected into the mould. A moulded tread member 14 can be released from the mould after the RIM material is cured in approximately 3-5 minutes. The RIM injection moulding process is conducted in a RIM machine or a RTM (Resin Transfer Moulding) machine at low moulding pressures between 344.7 to 689.5 kPa (50 to 100 psi). The Nylon 6 RIM components are kept in tanks at a temperature between 66-93$^{\circ}$ C (150-200$^{\circ}$ F) with the mould temperature set at 121$^{\circ}$ C (250$^{\circ}$ F).

Two different types of Nylon 6 RIM material have been used. Table I shows the formulation for a hard Nylon 6 RIM material having a Shore D durometer of 75-80. Table II shows a soft Nylon 6 RIM material which has a Shore D durometer between 35-38. Tread members have been made from both the soft RIM formulation and the hard RIM formulation.

TABLE I

| HARD NYLON 6 RIM COMPOSITION | |
| --- | --- |
| A-Part | Parts by Weight |
| Polyether Polyol Prepolymer (Monsanto P-1) | 21.9 |
| Caprolactam (Nipro) | 27.1 |
| Antioxidant (Monsanto Flectol (R.T.M.) H) | 0.5 |
| B-Part | |
| Caprolactam (Nipro) | 38.8 |
| Magnesium Bromide Catalyst (Monsanto C-1) | 11.2 |

TABLE II

| SOFT NYLON 6 RIM COMPOSITION | |
| --- | --- |
| A-Part | Parts by Weight |
| Polytetramethylene Polyol Prepolymer (Monsanto P-4) | 43.7 |
| Caprolactam (Nipro) | 5.4 |
| Antioxidant (Monsanto Flectol (R.T.M.) H) | 0.44 |
| B-Part | |
| Caprolactam (Nipro) | 42.5 |
| Magnesium Bromide Catalyst (Monsanto C-1) | 7.5 |

Figure 3 shows a composite tread member reaction injection-moulded of Nylon 6 RIM material. It is seen that polyaramid fibre bundles 52 are oriented substantially perpendicularly to wear surface 42 of tread member 14 to obtain the maximum abrasion resistance. There is reason to believe that even when polyaramid fibre bundles are oriented at a small angle, i.e. up to 30$^{\circ}$, from being perpendicular to the wear surface of the tread member, the abrasion resistance of the tread member only suffers slightly. Other abrasion-resistant fibres such as glass fibres and Nylon fibres have also been used and produced satisfactory results.

Other materials can be used in place of Nylon 6 RIM material as the polymeric matrix material in the composite tread members of the present invention. For instance, polyurethane RIM material, polyurea RIM material or any other polymeric material that has good abrasion-resistant property can be used. It has been found specifically that polyurethane RIM material and polyurea RIM material work satisfactorily as the polymeric matrix material in the composite tread member of the invention.

In an alternative embodiment of the invention, pleat assemblies 56' of polyaramid fibre webbing obtained by folding the webbing back and forth on itself in pleats are used in place of the elongated rolls of polyaramid fibre webbing. In this process, narrow webbing of polyaramid fibre bundles interwoven with polyester fibre bundles is pleated at a predetermined width and thickness. The desirable width and thickness of the pleats can be easily determined by the geometry of the composite tread member. It has been found that a suitable pleat size for the polyaramid fibre webbing is about 5 to 7.5 centimetres (2 to 3 inches) in width and about 10 to 12.5 centimetres (4 to 5 inches) in thickness.

The pleated form of polyaramid fibre webbing used in the alternative embodiment has similar wear properties to the roll form of polyaramid fibre webbing used in the preferred embodiment. They both significantly increase the wear resistance of the composite tread members of the invention. Furthermore, the common operational problems associated with conventional unreinforced tread members are greatly reduced.

From the foregoing, it should be apparent that the present invention provides a novel composite tread member that is far superior in properties and durability when compared to conventional unreinforced tread members.

Our co-pending European patent application No.88310214.7 discloses and claims a composite tread member for use in a track for a track-laying vehicle which has a metal support member embedded in a monofilament-reinforced polymeric material, and one example of such a reinforcing monofilament comprises bundles of polyaramid fibre coated with a polyamide material.

**Claims**

1. A tread member (14) for use in a track (10) for a track-laying vehicle (12) having a continuous endless belt with interconnected link units in which the tread member (10) is detachably mounted by mechanical means to said link units and has a wear surface (42) for engaging a ground surface on which said vehicle is operated, characterised in that said tread member is a composite tread member (14) including a metal support member (16) embedded in a abrasion-resistant fibre-reinforced polymeric material (18), in which the abrasion-resistant fibres are present as bundles of abrasion-resistant fibres (52) woven into a structure (50) by means of bundles of polyester fibres (54) and oriented within the polymeric material (18) so as to be substantially perpendicular to said wear surface (42).

2. A tread member (14) according to claim 1, characterised in that the abrasion-resistant fibres are polyaramid fibres.

3. A tread member (14) according to claim 2, characterised in that said structure of polyaramid fibres comprises a narrow webbing (50) of said polyaramid fibre bundles (52) interwoven with said polyester bundles (54), in which said polyaramid fibre bundles are oriented to extend transversely across the webbing (50).

4. A tread member (14) according to claim 3, characterised in that the narrow webbing (50) is present in the polymeric material (18) arranged in elongated rolls (56) formed by rolling up said narrow webbing (50) of polyaramid fibre bundles (52) interwoven with polyester fibre bundles (54) so that in each roll (56) the polyaramid fibre bundles (52) therein are aligned with the roll axis of that roll (56).

5. A tread member (14) according to claim 3, characterised in that the narrow webbing (50) is present in the polymeric material (18) arranged in pleat assemblies (56'), each of which is formed by folding said webbing (50) back and forth upon itself, each pleat assembly (56') being aligned within the polymeric material (18) so that the bundles of polyaramid fibres (52) therein are substantially perpendicular to said wear surface (42).

6. A method for making a tread member (14) for use in a track (10) for a track-laying vehicle (12) having a continuous endless belt with interconnected link units in which the tread member (10) is detachably mounted by mechanical means to said link units and has a wear surface (42) for engaging a ground surface on which said vehicle is operated, characterised in that said tread member is a composite tread member (14) including a metal support member (16) embedded in a abrasion-resistant fibre-reinforced polymeric material (18) made by a reaction-injection moulding process using a matched set of upper and lower mould members having interior mould surfaces defining a mould cavity therein; and said method comprises the steps of: weaving bundles of abrasion-resistant fibres (52) into a structure (50) by means of bundles of polyester fibres (54), forming said structure (50) into a plurality of assemblies (56;56'), positioning said assemblies (56;56') in the lower mould member in an orientation such that said fibre bundles are positioned in a substantially perpendicular relationship to said interior mould surface of said lower mould member, placing said metal support member (16) on top of said assemblies (56;56'), closing said upper mould member onto said lower mould member to form said mould cavity therein, injecting a quantity of a reaction-injection mouldable polymeric material (18) into said mould cavity to embed said assemblies (56;56') and said metal support member (16) therein to form said composite tread member (14), and releasing said composite tread member (14) from said mould cavity after said polymeric material has cured therein.

7. A method for making a tread member (14) according to claim 6, characterised in that each assembly comprises an elongated roll (56) formed by rolling up a narrow webbing (50) of polyaramid fibre bundles (52) interwoven with polyester fibre bundles (54) in which the polyaramid fibre bundles (52) therein extend across the width of the webbing (50).

8. A method for making a tread member (14) according to claim 6, characterised in that each assembly comprises a pleated assembly (56') having pleats of predetermined width and thickness made by pleating a narrow webbing (50) of polyaramid fibre bundles (52) interwoven with polyester fibre bundles (54) in which the polyaramid fibre bundles (52) therein extend across the width of the webbing (50).

*Fig. 1*

*Fig. 2*

Fig. 3

Fig. 4